# FASCICULE DE BREVET EUROPEEN

(11) **EP 3 507 085 B1**
(45) Date de publication et mention de la délivrance du brevet: **29.07.2020**
(21) Numéro de dépôt: 17765118.9
(22) Date de dépôt: 01.09.2017
(51) Int. Cl.: B29C 70/24, B29B 11/16, D03D 25/00, B29K 307/04, B64C 1/06, B29L 31/00

(54) **PRÉFORME, PIÈCE D'OSSATURE ET PROCÉDÉ DE FABRICATION D'UNE TELLE PRÉFORME**
VORFORMLING, FÜGETEIL UND VERFAHREN ZUR HERSTELLUNG EINES DERARTIGEN VORFORMLINGS
PREFORM, FRAMEWORK PART, AND METHOD FOR PRODUCING SUCH A PREFORM

(30) Priorité: 02.09.2016 FR 1658182
(43) Date de publication de la demande: 10.07.2019
(73) Titulaire: Porcher Industries, 38300 Badinières (FR)
(72) Inventeur: RISICATO, Jean Vincent, 38140 Beaucroissant (FR); VARANIAC, Patrick, 38300 Tramolé (FR)
(74) Mandataire: Lavoix
(86) Numéro de dépôt international: PCT/EP2017/071949
(87) Numéro de publication internationale: WO 2018/041992

(56) Documents cités:
- WO-A2-2006/136755
- WO-A2-2013/088038

## Description

L'invention concerne une préforme, notamment de raidisseur, en structure fibreuse tridimensionelle conformément à la revendication 1, une pièce d'ossature, notamment un raidisseur, comprenant une telle préforme, ainsi qu'un procédé de fabrication d'une telle préforme conformément à la revendication 9.

L'invention est relative à la réalisation de pièces en matériau composite et plus particulièrement de structures fibreuses de renfort de telles pièces, ces structures fibreuses étant obtenues par tissage tridimensionnel ou tissage 3D. Plus précisément, on vise à réaliser une préforme en structure fibreuse, qui présente une forme et des dimensions définitives ou quasi-définitives de la pièce en matériau composite à réaliser. Une telle préforme est conçue pour être ensuite densifiée, c'est-à-dire consolidée, avec une matrice en résine pour former la pièce en matériau composite.

Un domaine d'application de l'invention est la réalisation de pièces d'ossature, notamment de poutres ou de raidisseurs, en matériau composite, à renfort fibreux et matrice en résine. De telles pièces, généralement de forme allongée, sont utilisées dans de nombreux domaines, notamment en construction aéronautique. L'invention vise notamment la réalisation de pièces présentant une partie mince sur au moins un bord longitudinal de la pièce de structure.

Dans le cas de pièces composites présentant des parties minces, comme les parties de liaison des raidisseurs ou les bords de fuite de pales d'aubes pour turbomachines, il convient de conserver la structure tridimensionnelle jusque dans ces parties minces tout en conservant la continuité structurale avec les parties plus épaisses. La pratique habituelle consistant, au cours du tissage, à retirer des fils dans le sens chaîne et/ou trame, peut entraîner des variations trop importantes du taux de fibre et un effilochage des parties minces à leur extrémité.

WO-A1-2006/136755 propose une structure de renfort comprenant une partie interne, ou cœur, et une partie adjacente à une surface extérieure, ou peau, la structure fibreuse étant formée par tissage tridimensionnel à cœur, peau et cœur étant formés par des armures différentes. La réduction d'épaisseur de la structure est obtenue par un nombre de couches de fils de trame plus faible dans les parties minces et le document propose d'avoir une zone de transition entre partie épaisse et partie mince sous la forme d'une couche partielle supplémentaire de fils de trame, liée par tissage à deux couches complètes de fils de trame entre lesquels elle est disposée, à l'aide d'une armure de type interlock. Le document mentionne en outre, sans autre précision, que le titre des fils entre le cœur et la peau peut varier, pour favoriser l'accès à cœur du gaz à travers la peau dans le cas de densification CVI. Dans la mesure où le document évoque seulement un « titre de fils décroissant entre cœur et peau », le document ne précise pas quels fils, parmi les fils en peau ou à cœur, ont le titre le plus élevé. En effet, l'expression susmentionnée n'indique pas si la décroissance du titre des fils a pour origine le cœur ou la peau et ne permet pas de conclure quels fils ont le titre le plus faible et quels fils ont le titre le plus élevé. En outre, cette solution n'a pas pour objectif d'obtenir des parties particulièrement minces comme les extrémités de pattes d'attache des raidisseurs.

WO-A1-2013/088039 propose une structure fibreuse de renfort réalisée en une seule pièce par tissage multicouche, en intégrant au moins une couche de fils à titre variable, chaque fil de cette couche étant formé d'un assemblage séparable de fibres, de sorte que, dans les parties minces, ces fils voient leur titre diminué par élimination de fibres séparables. Ceci se trouve combiné à une réduction progressive du nombre de couches de fils de trame dans les parties minces. Cependant le retrait de ces fils élémentaires complexifie le procédé de tissage.

WO-2013/088038 A2 propose une structure fibreuse de renfort de pièce en matériau composite, ladite structure étant tissée en une seule pièce par tissage multicouche, entre une première pluralité de couches de fils et une deuxième pluralité de couches de fils, la structure fibreuse comprenant au moins une portion d'épaisseur décroissante. Dans la portion d'épaisseur décroissante, la structure fibreuse comporte en surface:
- une ou plusieurs parties de retrait de fils en continuité de surface dans chacune desquelles des fils d'une couche de fils de la première pluralité de couches de fils sous-jacente a la couche de fils de la première pluralité de couche de fils située en surface de la structure sont interrompus,
- une ou plusieurs parties de retrait de fils en discontinuité de surface dans chacune desquelles des fils de la couche de fils de la première pluralité de couche de fils située en surface de la structure sont interrompus, chaque fil interrompu étant remplacé en surface de la structure par un fil d'une couche de fils sous-jacente de la première pluralité de couches de fils,

Par ailleurs, les fils des couches de la deuxième pluralité de couches de fils située en surface de la structure fibreuse sont continus sur au moins l'ensemble de la portion d'épaisseur décroissante.

L'invention a donc pour objectif de proposer une nouvelle préforme, qui, tout en étant particulièrement peu épaisse dans sa ou ses partie(s) mince(s), présente un risque d'effilochage particulièrement réduit dans cette partie et est relativement facile à fabriquer.

L'invention a pour objet une préforme, notamment de raidisseur, en structure fibreuse tridimensionnelle présentant une épaisseur et étant tissée en une seule pièce par tissage multicouche de couches de fils de chaîne et de couches de fils de trame réparties selon l'épaisseur, la préforme définissant au moins une première partie et au moins une deuxième partie prolongeant la première partie en direction d'un bord mince de la préforme, la préforme comprenant :
- un premier groupe de couches de fils de chaîne successives, qui inclut au moins une couche de fils de chaîne et qui est externe dans la première partie,
- un deuxième groupe de couches de fils de chaîne successives, qui inclut au moins une couche de fils de chaîne et qui est situé immédiatement sous le premier groupe de couches de fils de chaîne,
- un premier groupe de couches de fils de trame successives, qui inclut au moins une couche de fils de trames et qui est lié selon une armure avec le premier groupe de couches de fils de chaîne, de façon à être externe dans la première partie, et
- un deuxième groupe de couches de fils de trame successives, qui inclut au moins une couche de fils de trame et qui est situé immédiatement sous le premier groupe de couches de fils de trame dans la première partie.

En outre, le nombre de couches de fils de chaîne formant la deuxième partie est réduit par rapport au nombre de couches de fils de chaîne formant la première partie, du fait d'une absence du premier groupe de couches de fils de chaîne dans la deuxième partie, de sorte que la deuxième partie présente une épaisseur réduite par rapport à celle de la première partie et de sorte que le deuxième groupe de couches de fils de chaîne est externe dans la deuxième partie.

En outre, le premier groupe de couches de fils de trame s'étend jusque dans la deuxième partie, en étant lié selon une armure avec le deuxième groupe de couches de fils de chaîne dans la deuxième partie, de sorte que le premier groupe de couches de fils de trame est externe également dans la deuxième partie.

Selon l'invention :
- les fils de trame du premier groupe de couches de fils de trame ont un titre inférieur au titre des fils de trame du deuxième groupe de couches de fils de trame ; et/ou
- les fils de chaîne du premier groupe de couches de fils de chaîne ont un titre inférieur au titre des fils de chaîne du deuxième groupe de couches de fils de chaîne.

Grâce à l'invention, le risque d'effilochage est réduit même dans le cas où la deuxième partie présente une épaisseur très faible, dans la mesure où le premier groupe de couches de fils de trame est disposé à l'extérieur de la première partie et de la deuxième partie sans discontinuité. En particulier, la préforme présente avantageusement un état de surface sensiblement continu à une jonction entre la première partie et la deuxième partie. La fabrication de la préforme reste toutefois relativement simple, dans la mesure où le premier groupe de couches de fils de trame peut être intégré à la structure fibreuse au cours du tissage tridimensionnel de cette dernière. Par ailleurs, un métier à tisser tridimensionnel peut être aisément configuré pour que le nombre de fils de chaque couche de fils de chaîne soit différent d'une partie à l'autre et pour lier le premier groupe de couches de fils de trame à la fois au deuxième groupe de couches de fils de chaîne dans la deuxième partie et au premier groupe de couches de fils de chaîne dans la première partie.

De manière générale, la variation du titre des fils de la préforme permet d'obtenir une épaisseur particulièrement faible, notamment à proximité du bord mince où le nombre de couches internes est réduit.

Selon d'autres caractéristiques optionnelles et avantageuses de l'invention, prises seules ou en combinaison :
- le deuxième groupe de couches de fils de trame étant absent de la deuxième partie, par exemple par interruption des fils de trame de cette deuxième couche de fils de trame, à une jonction de la première partie avec la deuxième partie.
- la préforme contient des fils 6K et des fils 3K.
- la deuxième partie comprend au moins trois couches de fils de chaîne.
- la préforme comprend une troisième partie prolongeant la deuxième partie en direction du bord mince, alors que la préforme comprend un troisième groupe de couches de fils de chaîne successives, qui inclut au moins une couche de fils de chaîne et qui est situé immédiatement sous le deuxième groupe de couches de fils de chaîne dans la deuxième partie, alors que le nombre de couches de fils de chaîne formant la troisième partie est réduit par rapport au nombre de couches de fils de chaîne formant la deuxième partie, du fait d'une absence du deuxième groupe de couches de fils de chaîne dans la troisième partie, de sorte que la troisième partie présente une épaisseur réduite par rapport à celle de la deuxième partie et de sorte que le troisième groupe de couches de fils de chaîne est externe dans la troisième partie, et alors que le premier groupe de couches de fils de trame s'étend jusque dans la troisième partie, en étant lié selon une armure avec le troisième groupe de couches de fils de chaîne dans la troisième partie, de sorte que le premier groupe de couches de fils de trame est externe également dans la troisième partie.
- une pluralité de fils de chaîne et/ou de fils de trame de la préforme porte un polymère durci apportant un degré de cohésion à la préforme au moins dans la deuxième partie.
- le bord mince est soudé au moyen dudit polymère durci porté par les fils.

L'invention a également pour objet une pièce d'ossature, notamment un raidisseur, comprenant une préforme telle que définie ci-avant, ainsi qu'un matériau de consolidation, du genre résine, avec lequel la structure fibreuse de la préforme est imprégnée.

L'invention a également pour objet un procédé de fabrication d'une préforme, notamment de raidisseur, en structure fibreuse tridimensionnelle présentant une épaisseur et étant tissée d'une seule pièce, le procédé de fabrication comprenant une étape de tissage multicouche de couches de fils de chaîne et de couches de fils de trame réparties selon l'épaisseur, dans lequel on définit au moins une première partie et au moins une deuxième partie prolongeant la première partie en direction d'un bord mince de la préforme, de sorte que la préforme comprend :
- un premier groupe de couches de fils de chaîne successives, qui inclut au moins une couche de fils de chaîne et qui est externe dans la première partie,
- un deuxième groupe de couches de fils de chaîne successives, qui inclut au moins une couche de fils de chaîne et qui est situé immédiatement sous le premier groupe de couches de fils de chaîne,
- un premier groupe de couches de fils de trame successives, qui inclut au moins une couche de fils de trame et qui est lié selon une armure avec le premier groupe de couches de fils de chaîne, de façon à être externe dans la première partie, et
- un deuxième groupe de couches de fils de trame successives, qui inclut au moins une couche de fils de trame et qui est situé immédiatement sous le premier groupe de couches de fils de trame dans la première partie.

En outre, pour former la deuxième partie :
- on réduit le nombre de couches de fils de chaîne dans la deuxième partie par rapport au nombre de couches de fils de chaîne formant la première partie, cette réduction étant obtenue par absence du premier groupe de couches de fils de chaîne dans la deuxième partie, de sorte que la deuxième partie présente une épaisseur réduite par rapport à celle de la première partie, et de sorte que le deuxième groupe de couches de fils de chaîne est externe dans la deuxième partie, et
- on lie le premier groupe de couches de fils de trame, selon une armure, avec le deuxième groupe de couches de fils de chaîne dans la deuxième partie, de sorte que le premier groupe de couches de fils de trame est externe également dans la deuxième partie.

Selon l'invention :
- les fils de trame du premier groupe de couches de fils de trame ont un titre inférieur au titre des fils de trame du deuxième groupe de couches de fils de trame ; et/ou
- les fils de chaîne du premier groupe de couches de fils de chaîne ont un titre inférieur au titre des fils de chaîne du deuxième groupe de couches de fils de chaîne.

De préférence, la préforme comprend un deuxième groupe de couches de fils de trame, qui inclut au moins une couche de fils de trame et qui est situé immédiatement sous le premier groupe de couches de fils de trame dans la première partie, alors que, au niveau de la deuxième partie, on fait sortir de la structure fibreuse une partie excédentaire des fils de trame du deuxième groupe de couches de fils de trame, et alors que l'on coupe la partie excédentaire.

L'invention sera mieux comprise à la lecture de la description qui va suivre donnée uniquement à titre d'exemple non limitatif et faite en se référant aux dessins dans lesquels :
- La figure 1 est une vue en perspective schématique d'un raidisseur incluant une préforme en structure fibreuse conforme à un premier mode de réalisation de l'invention ;
- La figure 2 est une coupe, le long d'un plan P2, montrant un détail de la préforme de la figure 1 à plus grande échelle ; et
- La figure 3 est une coupe similaire à celle de la figure 2, montrant un détail d'une préforme conforme à un deuxième mode de réalisation de l'invention.

Les figures sont orientées selon un repère orthonormé R1, définissent trois directions de l'espace X, Y et Z.

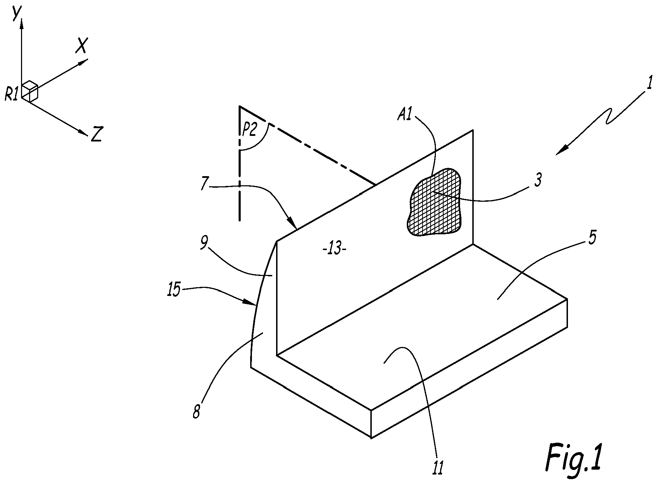

Le raidisseur 1 de la figure 1 constitue une pièce d'ossature, c'est-à-dire une pièce structurelle du genre longeron, pilier ou poutre, pour un véhicule, de préférence un aéronef. Le repère R1, attaché au raidisseur 1, est orienté de façon que la direction X soit parallèle à l'axe longitudinal du raidisseur 1, les directions Y et Z à des directions transversales du raidisseur 1.

Le raidisseur 1 est réalisé dans un matériau composite comprenant une préforme 3 en structure fibreuse tridimensionnelle, la préforme 3 étant consolidée, par exemple par imprégnation avec un matériau de consolidation ou de renfort 5 formant une matrice, du genre résine. De préférence, la résine est une résine thermoplastique ou thermodurcissable.

La préforme 3 est tissée en une seule pièce à l'aide d'un procédé de tissage tridimensionnel multicouche, incluant des couches successives de fils de chaîne 17, dont les fils 17 s'étendent selon la direction X. Les couches de fils de trame 19 s'étendent soit selon la direction Y, soit selon la direction Z, en fonction de la partie du raidisseur considérée. En particulier, dans une partie 9, formant une lame du raidisseur 1, les fils de trame s'étendent selon la direction Y, et le couches de fils de chaîne 17 et de fils de trame 19 sont réparties, c'est-à-dire empilées, selon la direction Z, orientée selon l'épaisseur de la lame 9, en étant liées les unes aux autres par tissage. Ainsi, les fils 17 et 19 sont ondulés et entrelacés les uns avec les autres selon une ou plusieurs armures de tissage prédéterminées.

Les fils de chaîne 17 et les fils de trame 19, sont par exemple réalisés dans un matériau organique, du genre polypropylène (PP), viscose, polyamide 6.6 (PA66), polyéthylène (PE), acétate de polyvinyle (PVA), Para-aramide, ou poly(p-phénylène-2,6-benzobisoxazole (PBO), ou dans un matériau inorganique, du genre acier, carbone, carbure de silicium, silice, verre E, verre S, ou verre R.

De façon préférentielle, la préforme 3 est répartie dans la totalité ou la quasi-totalité du volume du raidisseur 1.

La préforme 3, à l'issue de son tissage, d'une étape éventuelle de découpe de fils non tissés et d'une étape éventuelle de préformage telles que définis ci-après, présente avantageusement une forme identique ou quasi identique à celle du raidisseur 1 consolidé avec le matériau de consolidation 5. En d'autres termes, la concentration en structure fibreuse du raidisseur 1 est, de préférence sensiblement constante dans tout le volume du raidisseur 1, ou la quasi-totalité de ce volume. Par exemple, le taux volumique de fibres dans le raidisseur 1 est compris entre environ 30% et 80%.

Alternativement, la concentration en structure fibreuse du raidisseur 1 diffère dans certaines zones du raidisseur 1, selon l'application souhaitée.

De préférence également, le raidisseur 1 comprend une seule préforme 3 réalisée d'un seul tenant.

En pratique, la préforme 3 forme en elle-même une structure stable dans laquelle on injecte le matériau de consolidation 5, par exemple au sein d'un moule, pour former le raidisseur 1. De façon optionnelle, la préforme 3 occupe un espace légèrement supérieur au moule et doit être légèrement compactée pour être introduite dans le moule avant injection du matériau de consolidation.

En pratique, la préforme 3 affleure en tout ou partie de la surface externe du raidisseur 1, ce qui est montré schématiquement sur une partie locale A1 de la surface externe du raidisseur 1 de la figure 1.

Le raidisseur 1 et la préforme 3 présentent une section, prise selon le plan YZ, préférentiellement constante dans la direction X. Au niveau de la lame 9, cette section selon YZ présente, le long de la direction Y, une épaisseur variable selon la direction Z. En particulier, la lame 9 présente un bord mince 7, s'étendant parallèlement à la direction X. A partir du bord mince 7, la lame 9 va en s'épaississant parallèlement à la direction Y. La lame 9 présente une base 8, à l'opposé du bord mince 7, à partir de laquelle s'élève un muret 11, ou nervure, du raidisseur 1. En pratique, la structure fibreuse de la préforme 3 est tissée à plat, c'est-à-dire que la lame 9 et le muret 11 sont initialement formés à l'horizontal dans le même plan XY, lui-même orienté horizontalement. Au cours d'une étape de préformage de la préforme 3, l'orientation et la forme définitive du muret 11 est obtenue par déformation ou déploiement de la structure fibreuse. Le muret 11 est alors incliné par rapport à la lame 9, et s'étend dans le plan XZ, tel qu'illustré sur la figure 1, alors que la lame s'étend dans le plan XY perpendiculaire. Ainsi, tout ou partie des fils de trame du muret 11 s'étend perpendiculairement aux fils de trame de la lame 9, et en l'espèce parallèlement à la direction Z.

Plus précisément, avant l'étape de préformage, la structure fibreuse destinée à former la préforme 3 comporte au moins une déliaison dans un plan défini entre deux couches successives de fils de chaîne et/ou de trame. « Déliaison » signifie que deux couches de fils consécutives, dans le sens de l'épaisseur de la structure fibreuse, ne sont pas liées entre elles sur une certaine surface, mais réunies là où s'interrompt la déliaison. Grâce à cette déliaison, les deux parties séparées peuvent être écartées l'une de l'autre, ce qui permet le déploiement de la structure fibreuse pour lui donner sa forme définitive de préforme 3.

Par ailleurs, la totalité ou une fraction déterminée des fils de chaîne et/ou des fils de trame de la structure fibreuse, qui est tissée à plat et qui est destinée à former la préforme 3, porte un polymère thermosensible en surface. Au cours de l'étape de préformage, après déploiement de la structure fibreuse, on effectue un traitement thermique de la préforme 3 visant un ramollissement de ce polymère, puis un refroidissement, de façon à fixer la préformation de la préforme 3. La préforme 3 comporte alors au moins une partie dans laquelle les fils de chaîne 17 et les fils de trame 19 sont liés à leurs intersections par du polymère, là où l'un au moins des fils de chaîne 17 et/ou de trame 19 porte du polymère. Le polymère est à l'état durci. La liaison aux points d'intersection est obtenue par ramollissement, puis durcissement du polymère par un chauffage adapté.

On peut donc aussi définir la préforme comme comprenant une structure textile dont le tissage a été effectué en utilisant des fils de chaîne et/ou des fils de trame portant en surface le polymère thermosensible. Le passage à la préforme s'est fait par thermoformage à une température supérieure au point de ramollissement du polymère, suivi d'un refroidissement, ce grâce à quoi les fils de chaîne et les fils de trame sont liés à leurs intersections par du polymère là où l'un au moins des fils de chaîne et/ou de trame porte du polymère.

Le polymère présent sur les fils est figé, s'il est thermodurcissable, il est durci, s'il est thermoplastique. Il est en dessous de sa température de transition vitreuse. Thermodurcissable ou thermoplastique, le polymère présente une température de ramollissement qui peut correspondre à sa Tg. Le passage de cette température conduit à un ramollissement réversible permettant, d'une part, la liaison des fils enduits, c'est-à-dire l'un au moins du fil de chaîne et du fil de trame en contact, à leurs points d'intersection, et, d'autre part, de déployer la structure fibreuse sous sa forme de « préforme ». Le refroidissement en dessous de cette température fige alors la préforme, prête à être imprégnée de matériau de consolidation, et facilement manipulable.

Le polymère au contact de certains fils de chaîne et/ou de trame peut être choisi parmi les polymères ,y inclus les copolymères, thermoplastiques et thermodurcissables. Il peut être identique ou différent du polymère qui sera ensuite injecté ou infusé. On peut citer notamment : les polyamides (PA), les copolyamides (CoPA), les polyamides-bloc éther ou ester (PEBAX, PEBA), les polyphtalamides (PPA), les polyesters (notamment polyéthylène téréphtalate -PET-, polybutylène téréphtalate - PBT-), les copolyesters (CoPE), les polyuréthanes thermoplastiques (TPU), les polyacétales (POM, ...), les polyoléfines (notamment PP, HDPE, LDPE, LLDPE), les polyéthersulfones (PES), les polysulfones (PSU,...), les polyphénylènes sulfones (PPSU,...) ; les polymères de la famille des PAEK polyaryléthercétones comprenant notamment les polyétheréthercétones (PEEK) et les polyéthercétonecétone (PEKK) ; le poly(sulfure de phénylène) (PPS), les polyétherimides (PEI), les polyimides thermoplastiques, les polymères à cristaux liquides (LCP), les phénoxys, les copolymères à blocs tels que les copolymères styrène-butadiène-méthylméthacrylate (SBM), les copolymères méthylméthacrylate-acrylate de butyl-méthylméthacrylate (MAM) et leurs mélanges, les époxy, le bismaléimide, les polymères phénoliques.

Quel que soit le procédé pour préformer la préforme 3, la lame 9 est délimitée par une surface plane 13 s'étendant dans le plan XY, et par une surface oblique 15, qui est courbe dans le présent exemple. La surface oblique 15 est inclinée par rapport au plan XY, de sorte que les surfaces 13 et 15 convergent l'une vers l'autre jusqu'au bord mince 7 par lequel elles se terminent. En variante, la surface oblique 15 est plane, ou d'une autre forme, dont la projection dans le plan YZ est monotone et convergente par rapport au plan XY. De même, la surface 13 peut être oblique par rapport au plan XY, en étant plane, courbe, ou d'une autre forme, dont la projection dans le plan YZ est monotone et convergente par rapport au plan XY.

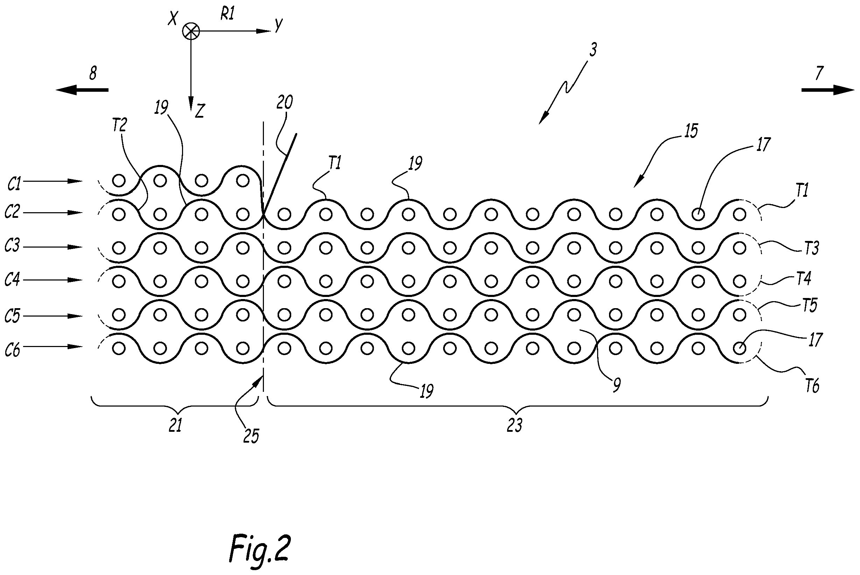

La figure 2 représente, de façon très schématique, une coupe selon un plan P2 parallèle au plan YZ d'une zone de la lame 9, à une échelle suffisamment grande pour que les fils de chaîne 17 et les fils de trame 19 soient visibles sur cette figure 2. La surface oblique 15 visible sur la figure 1 se retrouve en haut de la figure 2. Le bord mince 7 et la base 8 ne sont pas visibles sur la figure 2, mais sont situés hors de la figure 2, respectivement à droite et à gauche de cette dernière, comme symbolisé par des flèches 7 et 8 respectivement. Les fils de chaîne 17, s'étendant dans la direction X, sont représentés coupés par le plan P2, alors que les fils de trame 19 s'étendent le long de ce plan P2, parallèlement à la direction Y.

La préforme 3 définit une première partie 21 et une deuxième partie 23 selon la direction Y. La partie 21 est dite « épaisse », dans la mesure où elle présente une épaisseur selon la direction Z, dont la valeur est supérieure à celle de la partie 23, qui est donc qualifiée de « mince ». La partie mince 23 prolonge la partie épaisse 21 à partir d'une jonction 25 de la préforme 3. En d'autres termes, la partie mince 23 continue la partie épaisse 21, la limite entre la partie mince 23 et la partie épaisse étant située à la jonction 25. Plus précisément, la jonction 25 est située immédiatement de façon adjacente au dernier des fils de chaîne 17 de la première couche C1. La partie mince 23 s'étend à partir de la jonction 25 jusqu'au bord mince 7 de la préforme 3. La partie épaisse 21 s'étend quant à elle depuis la jonction 25 jusqu'à la base 8 de la lame 9 de la préforme 3.

La préforme 3 comprend, au moins dans la partie épaisse 21 et la partie mince 23, une pluralité de couches de fils de chaîne 17 successives réparties dans le sens de l'épaisseur de la préforme 3, dont des couches successives C1, C2, C3, C4, C5, C6, ainsi que d'autres couches subséquentes non visibles sur la figure 2. Par « successives », on entend que la couche C2 est située immédiatement sous la couche C1, que la couche C3 est située immédiatement sous la couche C2, et ainsi de suite. Par « successive », on entend que les couches désignées sont réparties dans l'ordre indiqué, depuis la partie externe vers le cœur de la préforme 3. Par « immédiatement », on entend qu'aucune couche de fils de chaîne 17 n'est interposée entre une première couche de fils de chaîne 17 et une deuxième couche de fils de chaîne 17 située immédiatement sous cette première couche de fils de chaîne 17. En revanche, des fils de trame peuvent être interposés entre deux couches de fils de chaîne immédiatement l'une sous l'autre.

On qualifie avec le terme « externe », ou l'expression « de peau », une couche ou un groupe de couches successives, pour des fils d'une même direction, soit trame, soit chaîne, cette couche ou groupe étant le plus proche de la surface de la préforme 3, dans le sens de l'épaisseur, c'est-à-dire selon la direction Z dans le présent exemple. Par opposition, on qualifie avec le terme « interne » ou l'expression « à cœur », toute couche ou groupe de couche successives, de fils de la même direction, soit trame, soit chaîne, couche ou groupe qui est séparé de la surface de la préforme 3 par au moins une couche externe de fils de la même direction.

Dans l'exemple de la figure 2, la première couche C1 est externe dans la partie épaisse 21. Ainsi, dans la partie épaisse 21, la couche C1 s'étend au niveau de la surface 15, et forme une couche de peau de la préforme 3.

Le nombre de couches de fils de chaîne 17 formant la partie mince 23 est réduit par rapport au nombre de couches de fils de chaîne 17 formant la partie épaisse 21, du fait d'une absence de la première couche C1 de fils de chaîne 17 dans la partie mince 23. C'est ainsi que la partie mince 23 présente une épaisseur réduite par rapport à l'épaisseur de la partie épaisse 21. Dans la partie mince 23, à partir de la jonction 25, la première couche C1 de fils de chaîne 17 est interrompue, ou absente. En d'autres termes, la préforme 3 est dénuée de fils de chaîne 17 au niveau de la couche C1 dans la partie mince 23. Grâce à cette absence de la couche C1 dans la partie mince 23, l'épaisseur mesurée selon la direction Z de la partie mince 23 est inférieure à l'épaisseur selon la direction Z de la partie épaisse 21. Du fait de cette absence de la couche C1 dans la partie mince 23 également, la deuxième couche de fils de chaîne C2 est externe dans la partie mince 23, tout en se prolongeant dans la partie épaisse 21 sous la couche C1, de sorte que la couche C2 est interne dans la partie épaisse en étant immédiatement sous la couche C1.

La lame 9 de la préforme 3 comprend également une pluralité de couches de fils de trame 19, dont des couches successives T1, T2, T3, T4, T5 et T6, visibles sur la figure 2, ainsi que d'autres couches subséquentes de fils de trame non visibles sur la figure 2. Les fils de trame 19 de chaque couche sont liés selon une armure avec au moins l'une des couches de fils de chaîne 17.

La deuxième couche T2 de fils de trame est située immédiatement sous la première couche T1 de fils de trame 19 dans la partie épaisse 21. La troisième couche T3 de fils de trame 19 est située immédiatement sous la deuxième couche T2, dans la partie épaisse 21, et immédiatement sous la première couche T1 dans la partie mince 23. La quatrième couche de fils de trame T4 est située immédiatement sous la troisième couche de fils de trame T3 dans la partie mince 23 comme dans la partie épaisse 21. La cinquième couche T5 est située immédiatement sous la quatrième couche T4, alors que la sixième couche T6 est située immédiatement sous la cinquième couche T5. Par « immédiatement », on entend qu'aucune couche de fils de trame 19 n'est interposée entre une première couche de fils de trame 19 et une deuxième couche de fils de trame 19 située immédiatement sous cette première couche de fils de trame 19. En revanche, des fils de chaîne peuvent être interposés entre deux couches de fils de trame immédiatement l'une sous l'autre.

La première couche T1 de fils de trame 19 est liée selon une armure avec la première couche C1 de fils de chaîne 17, de façon à être externe dans la partie épaisse 21. A partir de la jonction 25, la première couche de fils de trame T1 descend d'un rang dans le sens de l'épaisseur, de façon à s'étendre jusque dans la partie mince 23, en étant liée selon une armure avec la deuxième couche C2 de fils de chaîne 17 dans la partie mince 23. De cette façon, la première couche T1 de fils de trame 19 est externe également dans la partie mince 23. La première couche T1 forme ainsi une couche de peau selon la direction Y, à la fois dans la partie épaisse 21 et dans la partie mince 23.

Pour obtenir cet agencement particulier, la deuxième couche T2 de fils de trame 19 située immédiatement sous la première couche T1 de fils de trame 19 dans la partie épaisse 21, est absente de la partie mince 23 à partir de la jonction 25. Pour cela, comme illustré sur la figure 2, une partie excédentaire 20 de tout ou partie des fils de trame 19 de la deuxième couche T2 est avantageusement sortie à l'extérieur de la structure fibreuse de la préforme 3 au niveau de la jonction 25, au travers de la première couche T1 de fils de trame 19. En d'autres termes, la partie excédentaire 20 tourne autour du dernier fil de chaîne 17 de la première couche C1, ou d'un fil de chaine 17 voisin, en étant dirigée vers l'extérieur de la préforme 3. Ces parties excédentaires 20 sont avantageusement coupées de façon à garantir la régularité de l'état de surface de la surface 15. En tout état de cause, on interrompt tout ou partie des fils de trame 19 de la deuxième couche T2 à partir de la jonction 25, dans la partie mince 23.

Selon une variante non illustrée, tout ou partie des fils de trame 19 de la deuxième couche T2 n'est pas coupée, mais est tissée dans la partie mince 23, en étant liée selon une armure avec cette partie mince 23, en particulier avec des fils 17 de la deuxième couche C2 et/ou de la troisième couche C3, cette armure étant moins entrelacée que l'armure liant cette même couche T2 de fils de trame 19 avec les fils de chaîne 17 dans la partie épaisse 21. De préférence, dans cette variante, tout ou partie des fils de trame 19 de la troisième couche T3 et éventuellement d'autres couches de fils de trame 19 inférieures, présente également une armure moins entrelacée dans la partie mince 23 que dans la partie épaisse 21.

Quelle que soit la variante, on obtient ainsi une décroissance progressive de l'épaisseur de la lame 9 en direction du bord mince 7, c'est-à-dire une différence d'épaisseur selon la direction Z de la structure tridimensionnelle, au niveau de la jonction 25. La couche T1 formant une peau de la structure tridimensionnelle, l'état de surface de la préforme 3 est continu en dépit de cette différence d'épaisseur.

La préforme 3 comprend avantageusement une troisième partie, non visible sur la figure 1, prolongeant la partie 23 en direction du bord mince 7 à partir d'une jonction, non visible sur la figure 1, similaire à la jonction 25. Selon un schéma similaire à celui de la figure 1 pour la jonction 25, le nombre de couches de fils de chaîne 17 formant la troisième partie est réduit par rapport au nombre de couches de fils de chaîne 17 formant la partie 23, du fait d'une absence de la deuxième couche C2 de fils de chaîne 17 dans la troisième partie. Ainsi, la troisième partie présente une épaisseur réduite par rapport à celle de la partie 230. De plus, la troisième couche C3 de fils de chaîne 17 est externe dans la troisième partie. Par ailleurs, la première couche T1 de fils de trame 19 s'étend jusque dans la troisième partie, en étant liée selon une armure avec la troisième couche C3 de fils de chaîne 17 dans la troisième partie. La première couche T1 est donc externe également dans la troisième partie et forme ainsi une peau continue le long de toutes les parties de la lame 9. Selon le même schéma répété jusqu'au bord mince 7, des parties successives de moins en moins épaisses et séparées par des jonctions similaires à ce qui précède, peuvent être construites afin de produire une réduction progressive de l'épaisseur de la lame 9 jusqu'au bord mince 7. L'oblicité de la surface 15 par rapport au plan XY, ainsi que l'éventuelle courbure de la surface 15, sont obtenues par une succession de jonctions 25 similaires à celle de la figure 2 et avantageusement à l'aide de l'étape de préformage susmentionnée, les jonctions 25 étant réparties selon la direction Y. Chacune de ces jonctions sépare une partie plus épaisse d'une partie d'épaisseur inférieure. Au fur et à mesure de la succession des jonctions, l'épaisseur selon la direction Z de la préforme 3 est réduite, en l'espèce d'une ou plusieurs couches de fils 17 et 19 à chaque jonction 25, la première couche T1 s'étendant avantageusement de façon externe depuis la base 8 jusqu'au bord mince 7. En d'autres termes, la première couche T1 forme une couche continue de peau de la préforme 3, depuis la base 8 jusqu'au bord mince 7.

Pour obtenir l'oblicité de la surface 13, un schéma similaire peut être appliqué, notamment de façon symétrique.

De façon préférentielle, les fils de trame 19 de la première couche T1 de fils de trame 19 ont un titre inférieur au titre des fils de trame 19 de la deuxième couche C2 de fils de trame 19. De même, les fils de chaîne 17 de la première couche C1 ont un titre inférieur au titre des fils de chaîne 17 de la deuxième couche C2. De manière connue en soi, le titre ou titrage d'un fil correspond à la grosseur du fil, qui peut être définie de nombreuses façons, notamment par le nombre de filaments qui le compose. Dans ce cas, le titre du fil s'exprime en « K » qui correspond au nombre en milliers de filament par fils. De manière connue en soi, le titre d'un fil peut alternativement être défini notamment par sa masse linéique ou d'autres grandeurs similaires ou équivalentes.

Par exemple, les fils de la préforme 3 qui présentent un titre inférieur ont un titre qui est inférieur d'un rapport d'au moins 1,5 par rapport aux autres fils de la préforme 3, notamment un rapport d'environs 2, 5 ou 3, dans le cas de fils de carbone. De façon particulièrement préférentielle, la préforme 3 contient des fils 3K, qui forment les fils de titre inférieur, et des fils 6K, qui forment les fils de titre supérieur.

De manière générale, les couches de fils de chaîne 17 et de fils de trame 19 qui sont situées à proximité des couches C1 et T1, ainsi que ces couches C1 et T1, présentent des fils dont le titre est inférieur à d'autres fils de la préforme 3 situés plus à cœur, c'est-à-dire inclus dans des couches internes proches d'une distance médiane, parallèlement à la direction Z, entre les surfaces 15 et 13. Cette variation du titre des fils de la préforme 3 permet d'obtenir une épaisseur particulièrement faible, notamment à proximité du bord mince 7 où le nombre de couches internes est réduit.

Dans l'exemple de la figure 2, la partie mince 23 comprend au moins cinq couches de fils de chaîne 17. Alternativement, la partie mince 23 peut comprendre moins ou davantage de couches de fils de chaîne 17. En tout état de cause, la partie mince 23 comprend moins trois couches de fils de chaîne 17.

De préférence, le nombre de couche de fils de trame 19 correspond au nombre de couche de fils de chaîne 17. Cependant, on peut prévoir un nombre de couches de fils de chaîne 17 inférieur ou supérieur à celui des couches de fils de trame 19, avec une différence d'une ou plusieurs couches, en fonction notamment des armures de tissage mises en œuvre. Certains fils peuvent être non liés, au moins en partie, mais néanmoins emprisonnés par les couches de fil voisines.

Une pluralité de fils de chaîne 17 et/ou de fils de trame 19 de la préforme 3 portant préférentiellement un polymère durci apportant un degré de cohésion à la préforme 3, au moins dans la partie 23, le bord mince 7 est préférentiellement soudé au moyen de ce polymère porté par les fils.

Pour réaliser cette préforme 3, on met en œuvre un procédé de fabrication comprenant une étape de tissage multicouche des couches de fils de chaîne 17 et des couches de fils de trame 19, en les répartissant selon l'épaisseur de la préforme 3. Cette étape peut être réalisée à l'aide d'une machine automatique de tissage tridimensionnel, du genre métier à tisser. On réalise ainsi la partie épaisse 21 et la partie mince 23, laquelle est en direction du bord mince 7 de la préforme 3. On programme la machine de tissage pour que la préforme comprenne les différentes couches de fils de chaîne 17 et de fils de trame 19 susmentionnées, liées et agencées comme défini ci-avant.

De façon préférentielle, une fois l'étape de tissage effectuée, on coupe les parties excédentaires 20, ainsi que les éventuels fils non tissés. Optionnellement, tout ou partie des fils de trame 19 de la deuxième couche T2 est tissée également dans la partie 23 avec une armure moins entrelacée que dans la partie 21, comme décrit ci-avant.

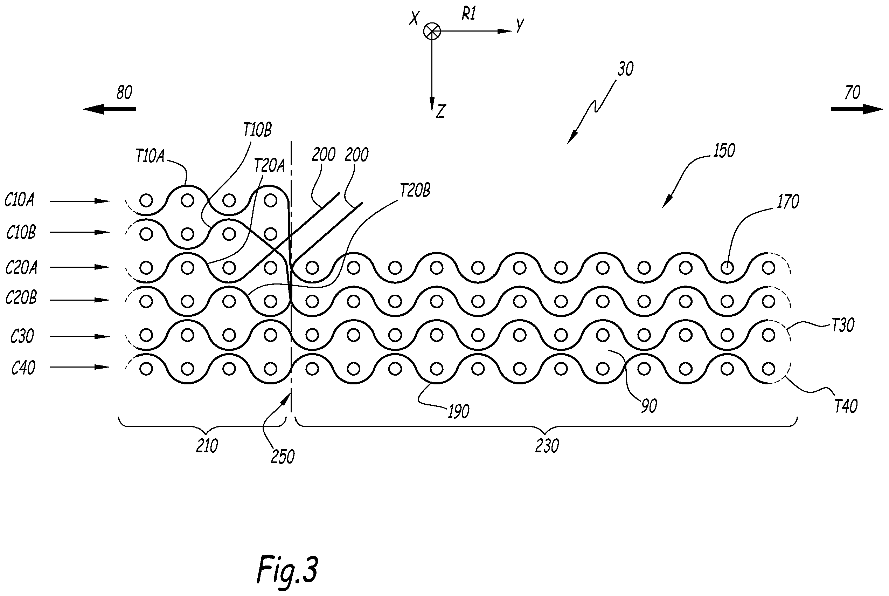

La figure 3 représente un deuxième mode de réalisation d'une préforme 30 conforme à l'invention, similaire à la préforme 3 des figures 1 et 2. La préforme 30 présente des caractéristiques similaires à celles de la préforme 3, qui sont désignées sur la figure 3 par des signes de référence multipliés par 10 par rapport aux signes de référence des figures 1 et 2 associés aux caractéristiques correspondantes.

Dans ce mode de réalisation de la figure 3, la préforme 30 est réalisée en structure fibreuse tridimensionnelle présentant une épaisseur, mesurée selon la direction Z, et étant tissée en une seule pièce par tissage multicouche de couches successives C10A, C10B, C20A, C20B, C30 et C40 de fils de chaîne 170 et de couches successives T10A, T10B, T20A, T20B, T30 et T40 de fils de trame 190 réparties selon l'épaisseur. La préforme 30 définit au moins une partie épaisse 210 et au moins une partie mince 230 prolongeant la partie épaisse en direction d'un bord mince 70 d'une lame 90 de la préforme 30. Le bord mince 70, non visible sur la figure 3, est situé hors de la figure 3 vers la droite, comme symbolisé par une flèche 70. La lame 90 comprend également une base 80 opposée, non visible sur la figure 3, et symbolisée par une flèche 80. La préforme 30 comprend deux premières couches C10A et C10B de fils de chaîne 170, la couche C10B étant située immédiatement sous la couche C10A, les deux couches C10A et C10B formant un groupe externe de couches successives. La préforme 30 comprend aussi deux couches successives C20A et C20B de fils de chaîne 170, la couche C20A étant située immédiatement sous la couche C10B, formant un autre groupe de couches de fils de chaîne. La préforme 30 comprend en outre deux premières couches T10A et T10B de fils de trame 190 formant un premier groupe de couches de fils de trame, lequel est externe dans la partie épaisse 210. Les couches T10A et T10B sont liées, dans cet exemple, selon une armure, respectivement avec les couches C10A et C10B de fils de chaîne 170.

Dans ce mode de réalisation de la figure 3, le nombre de couches de fils de chaîne 170 formant la partie mince 230 est réduit par rapport au nombre de couches de fils de chaîne 170 formant la partie épaisse 210, du fait d'une absence des deux premières couches C10A et C10B de fils de chaîne 170 dans la partie mince 230. Ainsi, le groupe formé par les couches C20A et C20B de fils de chaîne est externe dans la partie mince 230. De plus, les deux premières couches T10A et T10B de fils de trame 190 s'étendent jusque dans la partie mince 230, en étant liées selon une armure, respectivement avec les couches C20A et C20B de fils de chaîne 170 dans la partie mince 230, de façon à former un groupe externes de fils de chaîne successifs également dans la partie mince 230. Au niveau d'une jonction 250 entre la partie épaisse 210 et la partie mince 230, on a coupé les parties excédentaires 200 des fils de trame 190 de deux couches successives T20A et T20B, la couche T20A étant située immédiatement sous la couche T10B, et la couche T20B immédiatement sous la couche T20A. Les couches T20A et T20B forment un deuxième groupe de couches successives de fils de trame 190.

Si dans les exemples susmentionnés, les préformes 3 et 30 sont utilisées dans la réalisation d'un raidisseur 1, de telles préformes peuvent également être utilisées dans la réalisation de n'importe quelle autre pièce, préférentiellement pour une ossature, la pièce étant réalisée dans un matériau composite incluant la préforme et comportant un bord mince. Par exemple, cette pièce est utilisée au sein d'une ossature d'un véhicule terrestre, naval ou aérien, ou d'un bâtiment.

Des armures différentes que celles représentées aux figures peuvent être mises en œuvre.

Les caractéristiques de chaque mode de réalisation ou variante décrits ci-avant peuvent être intégrées à tous modes de réalisation ou variantes décrits ci-avant, pour autant que cela soit techniquement possible. En particulier, une même préforme peut comprendre à la fois des jonctions similaires à celle de la jonction 25 de la figure 2 et des jonctions similaires à la jonction 250 de la figure 3, notamment dans le but de créer des courbures pour les surfaces de la lame d'une préforme.

## Revendications

1. Préforme (3; 30), notamment de raidisseur (1), en structure fibreuse tridimensionnelle présentant une épaisseur (Z) et étant tissée en une seule pièce par tissage multicouche de couches de fils de chaîne (17; 170) et de couches de fils de trame (19; 190) réparties selon l'épaisseur, la préforme définissant au moins une première partie (21; 210) et au moins une deuxième partie (23; 230) prolongeant la première partie en direction d'un bord mince (7; 70) de la préforme, la préforme comprenant :
- un premier groupe (C1; C10A, C10B) de couches de fils de chaîne successives, qui inclut au moins une couche de fils de chaîne et qui est externe dans la première partie,
- un deuxième groupe (C2 ; C20A, C20B) de couches de fils de chaîne successives, qui inclut au moins une couche de fils de chaîne et qui est situé immédiatement sous le premier groupe de couches de fils de chaîne,
- un premier groupe (T1; T10A, T10B) de couches de fils de trame successives, qui inclut au moins une couche de fils de trames et qui est lié selon une armure avec le premier groupe de couches de fils de chaîne, de façon à être externe dans la première partie, et
- un deuxième groupe (T2 ; T20A, T20B) de couches de fils de trame successives, qui inclut au moins une couche de fils de trame et qui est situé immédiatement sous le premier groupe (T1 ; T10A, T10B) de couches de fils de trame dans la première partie (21 ; 210), le deuxième groupe de couches de fils de trame étant absent de la deuxième partie (23, 230),
alors que :
- le nombre de couches de fils de chaîne (17; 170) formant la deuxième partie (23; 230) est réduit par rapport au nombre de couches de fils de chaîne formant la première partie (21; 210), du fait d'une absence du premier groupe (C1; C10A, C10B) de couches de fils de chaîne dans la deuxième partie, de sorte que la deuxième partie présente une épaisseur (Z) réduite par rapport à celle de la première partie et de sorte que le deuxième groupe (C2; C20A, C20B) de couches de fils de chaîne est externe dans la deuxième partie, et
- le premier groupe (T1; T10A, T10B) de couches de fils de trame (19; 190) s'étend jusque dans la deuxième partie, en étant lié selon une armure avec le deuxième groupe de couches de fils de chaîne dans la deuxième partie, de sorte que le premier groupe de couches de fils de trame est externe également dans la deuxième partie ;
la préforme étant **caractérisée en ce que** :
- les fils de trame (19; 190) du premier groupe (T1; T10A, T10B) de couches de fils de trame ont un titre inférieur au titre des fils de trame du deuxième groupe (T2; T20A, T20B) de couches de fils de trame ; et/ou
- les fils de chaîne (17; 170) du premier groupe (C1; C10A, C10B) de couches de fils de chaîne ont un titre inférieur au titre des fils de chaîne du deuxième groupe (C2; C20A, C20B) de couches de fils de chaîne.

2. Préforme (3; 30) selon la revendication 1, **caractérisée en ce que** l'absence du deuxième groupe de couches de fils de trame de la deuxième partie (23; 230) est effectuée par interruption des fils de trame de cette deuxième couche de fils de trame, à une jonction (25; 250) de la première partie (21; 210) avec la deuxième partie (23; 230).

3. Préforme (3; 30) selon l'une quelconque des revendications 1 ou 2, **caractérisée en ce que** la préforme contient des fils 6K et des fils 3K.

4. Préforme (3; 30) selon l'une quelconque des revendications précédentes, **caractérisée en ce que** la deuxième partie (23; 230) comprend au moins trois couches de fils de chaîne (17; 170).

5. Préforme (3; 30) selon l'une quelconque des revendications précédentes, **caractérisée en ce que** :
- la préforme comprend une troisième partie prolongeant la deuxième partie (23; 230) en direction du bord mince (7; 70),
- la préforme comprend un troisième groupe (C3 ; C30) de couches de fils de chaîne (17; 170) successives, qui inclut au moins une couche de fils de chaîne et qui est situé immédiatement sous le deuxième groupe de couches (C2; C20A, C20B) de fils de chaîne dans la deuxième partie,
- le nombre de couches de fils de chaîne formant la troisième partie est réduit par rapport au nombre de couches de fils de chaîne formant la deuxième partie (23; 230), du fait d'une absence du deuxième groupe de couches de fils de chaîne dans la troisième partie, de sorte que la troisième partie présente une épaisseur (Z) réduite par rapport à celle de la deuxième partie et de sorte que le troisième groupe de couches de fils de chaîne est externe dans la troisième partie, et
- le premier groupe (T1; T10A, T10B) de couches de fils de trame (19; 190) s'étend jusque dans la troisième partie, en étant lié selon une armure avec le troisième groupe de couches de fils de chaîne dans la troisième partie, de sorte que le premier groupe de couches de fils de trame est externe également dans la troisième partie.

6. Préforme (3; 30) selon l'une quelconque des revendications précédentes, **caractérisée en ce qu'**une pluralité de fils de chaîne (17; 170) et/ou de fils de trame (19; 190) de la préforme porte un polymère durci apportant un degré de cohésion à la préforme au moins dans la deuxième partie (23; 230).

7. Préforme (3; 30) selon la revendication 6, **caractérisée en ce que** le bord mince (7 ; 70) est soudé au moyen dudit polymère durci porté par les fils.

8. Pièce d'ossature, notamment un raidisseur (1), comprenant une préforme (3; 30) conforme à l'une quelconque des revendications précédentes, ainsi qu'un matériau de consolidation (5), du genre résine, avec lequel la structure fibreuse de la préforme est imprégnée.

9. Procédé de fabrication d'une préforme (3; 30), notamment de raidisseur (1), en structure fibreuse tridimensionnelle présentant une épaisseur (Z) et étant tissée d'une seule pièce, le procédé de fabrication comprenant une étape de tissage multicouche de couches de fils de chaîne (17; 170) et de couches de fils de trame (19; 190) réparties selon l'épaisseur, dans lequel on définit au moins une première partie (21; 210) et au moins une deuxième partie (23; 230) prolongeant la première partie en direction d'un bord mince (7; 70) de la préforme, de sorte que la préforme comprend :
- un premier groupe (C1; C10A, C10B) de couches de fils de chaîne successives, qui inclut au moins une couche de fils de chaîne et qui est externe dans la première partie,
- un deuxième groupe (C2; C20A, C20B) de couches de fils de chaîne successives, qui inclut au moins une couche de fils de chaîne et qui est situé immédiatement sous le premier groupe de couches de fils de chaîne,
- un premier groupe (T1; T10A, T10B) de couches de fils de trame successives, qui inclut au moins une couche de fils de trame et qui est lié selon une armure avec le premier groupe de couches de fils de chaîne, de façon à être externe dans la première partie, et
- un deuxième groupe (T2 ; T20A, T20B) de couches de fils de trame successives, qui inclut au moins une couche de fils de trame et qui est situé immédiatement sous le premier groupe (T1 ; T10A, T10B) de couches de fils de trame dans la première partie (21 ; 210),
alors que, pour former la deuxième partie (23; 230) :
- on réduit le nombre de couches de fils de chaîne (17; 170) dans la deuxième partie par rapport au nombre de couches de fils de chaîne formant la première partie (21; 210), cette réduction étant obtenue par absence du premier groupe (C1; C10A, C10B) de couches de fils de chaîne dans la deuxième partie, de sorte que la deuxième partie présente une épaisseur (Z) réduite par rapport à celle de la première partie, et de sorte que le deuxième groupe (C2; C20A, C20B) de couches de fils de chaîne est externe dans la deuxième partie, et
- on lie le premier groupe (T1; T10A, T10B) de couches de fils de trame (19; 190), selon une armure, avec le deuxième groupe (C2; C20A, C20B) de couches de fils de chaîne (17; 170) dans la deuxième partie, de sorte que le premier groupe de couches de fils de trame est externe également dans la deuxième partie ;
le procédé de fabrication étant **caractérisé en ce que** :
- les fils de trame (19; 190) du premier groupe (T1; T10A, T10B) de couches de fils de trame ont un titre inférieur au titre des fils de trame du deuxième groupe (T2; T20A, T20B) de couches de fils de trame ; et/ou
- les fils de chaîne (17; 170) du premier groupe (C1; C10A, C10B) de couches de fils de chaîne ont un titre inférieur au titre des fils de chaîne du deuxième groupe (C2; C20A, C20B) de couches de fils de chaîne.

10. Procédé de fabrication selon la revendication 9, **caractérisé en ce que** :
- au niveau de la deuxième partie (23; 230), on fait sortir de la structure fibreuse une partie excédentaire (20; 200) des fils de trame du deuxième groupe de couches de fils de trame, et
- on coupe la partie excédentaire.

## Patentansprüche

1. Vorform (3; 30), insbesondere für eine Versteifung (1), aus einer dreidimensionalen Faserstruktur, die eine Dicke (Z) aufweist und in einem einzigen Stück gewebt ist durch mehrlagiges Weben von Lagen von Kettfäden (17; 170) und von Lagen von Schussfäden (19; 190), die gemäß der Dicke verteilt sind, wobei die Vorform wenigstens einen ersten Teil (21; 210) und wenigstens einen zweiten Teil (23; 230) definiert, der den ersten Teil in Richtung eines dünnen Rands (7; 70) der Vorform verlängert, wobei die Vorform Folgendes umfasst:
- eine erste Gruppe (C1; C10A, C10B) von aufeinanderfolgenden Lagen von Kettfäden, die wenigstens eine Lage von Kettfäden beinhaltet und die sich im ersten Teil außen befindet,
- eine zweite Gruppe (C2; C20A, C20B) von aufeinanderfolgenden Lagen von Kettfäden, die wenigstens eine Lage von Kettfäden beinhaltet und die sich unmittelbar unter der ersten Gruppe von Lagen von Kettfäden befindet,
- eine erste Gruppe (T1; T10A, T10B) von aufeinanderfolgenden Lagen von Schussfäden, die wenigstens eine Lage von Schussfäden beinhaltet und die gemäß einer Bindung mit der ersten Gruppe von Lagen von Kettfäden derart verbunden ist, dass sie sich in dem ersten Teil außen befindet, und
- eine zweite Gruppe (T2; T20A, T20B) von aufeinanderfolgenden Lagen von Schussfäden, die wenigstens eine Lage von Schussfäden beinhaltet und die sich unmittelbar unter der ersten Gruppe (T1; T10A, T10B) von Schussfäden in dem ersten Teil (21; 210) befindet, wobei die zweite Gruppe von Schussfäden in dem zweiten Teil (23, 230) abwesend ist,
wobei:
- die Anzahl an Lagen von Kettfäden (17; 170), die den zweiten Teil (23; 230) bilden, im Vergleich zu der Anzahl an Lagen von Kettfäden, die den ersten Teil (21; 210) bilden, aufgrund einer Abwesenheit der ersten Gruppe (C1; C10A, C10B) von Lagen von Kettfäden im zweiten Teil kleiner ist, sodass der zweite Teil eine Dicke (Z) aufweist, die im Vergleich zu jener des ersten Teils kleiner ist, und sodass sich die zweite Gruppe (C2; C20A, C20B) von Lagen von Kettfäden im zweiten Teil außen befindet, und
- die erste Gruppe (T1; T10A, T10B) von Lagen von Schussfäden (19; 190) sich bis in den zweiten Teil erstreckt, indem sie gemäß einer Bindung mit der zweiten Gruppe von Lagen von Kettfäden im zweiten Teil verbunden ist, sodass sich die erste Gruppe von Lagen von Schussfäden im zweiten Teil ebenfalls außen befindet;
wobei die Vorform **dadurch gekennzeichnet ist, dass**:
- die Schussfäden (19; 190) der ersten Gruppe (T1; T10A, T10B) von Lagen von Schussfäden einen Titer aufweisen, der kleiner als der Titer der Schussfäden der zweiten Gruppe (T2; T20A, T20B) von Lagen von Schussfäden ist; und/oder
- die Kettfäden (17; 170) der ersten Gruppe (C1; C10A, C10B) von Lagen von Kettfäden einen Titer aufweisen, der kleiner als der Titer der Kettfäden der zweiten Gruppe (C2; C20A, C20B) von Lagen von Kettfäden ist.

2. Vorform (3; 30) nach Anspruch 1, **dadurch gekennzeichnet, dass** die Abwesenheit der zweiten Gruppe von Lagen von Schussfäden in dem zweiten Teil (23; 230) durch eine Unterbrechung der Schussfäden dieser zweiten Lage von Schussfäden an einer Nahtstelle (25; 250) des ersten Teils (21; 210) mit dem zweiten Teil (23; 230) erzielt wird.

3. Vorform (3; 30) nach einem der Ansprüche 1 oder 2, **dadurch gekennzeichnet, dass** die Vorform 6K-Fäden und 3K-Fäden enthält.

4. Vorform (3; 30) nach einem der vorhergehenden Ansprüche, **dadurch gekennzeichnet, dass** der zweite Teil (23; 230) wenigstens drei Lagen von Kettfäden (17; 170) umfasst.

5. Vorform (3; 30) nach einem der vorhergehenden Ansprüche, **dadurch gekennzeichnet, dass**:
- die Vorform einen dritten Teil umfasst, der den zweiten Teil (23; 230) in Richtung des dünnen Rands (7; 70) verlängert,
- die Vorform eine dritte Gruppe (C3; C30) von aufeinanderfolgenden Lagen von Kettfäden (17; 170) umfasst, die wenigstens eine Lage von Kettfäden beinhaltet und die sich unmittelbar unter der zweiten Gruppe von Lagen (C2; C20A, C20B) von Kettfäden im zweiten Teil befindet,
- die Anzahl an Lagen von Kettfäden, die den dritten Teil bilden, im Vergleich zu der Anzahl an Lagen von Kettfäden, die den zweiten Teil (23; 230) bilden, aufgrund einer Abwesenheit der zweiten Gruppe von Lagen von Kettfäden im dritten Teil kleiner ist, sodass der dritte Teil eine Dicke (Z) aufweist, die im Vergleich zu jener des zweiten Teils kleiner ist, und sodass sich die dritte Gruppe von Lagen von Kettfäden im dritten Teil außen befindet, und
- sich die erste Gruppe (T1; T10A, T10B) von Lagen von Schussfäden (19; 190) bis in den dritten Teil erstreckt, indem sie gemäß einer Bindung mit der dritten Gruppe von Lagen von Kettfäden im dritten Teil verbunden ist, sodass sich die erste Gruppe von Lagen von Schussfäden im dritten Teil ebenfalls außen befindet.

6. Vorform (3; 30) nach einem der vorhergehenden Ansprüche, **dadurch gekennzeichnet, dass** eine Vielzahl von Kettfäden (17; 170) und/oder Schussfäden (19; 190) der Vorform ein gehärtetes Polymer trägt, das der Vorform wenigstens im zweiten Teil (23; 230) einen Grad an Zusammenhalt verleiht.

7. Vorform (3; 30) nach Anspruch 6, **dadurch gekennzeichnet, dass** der dünne Rand (7; 70) mittels des gehärteten Polymers, das von den Fäden getragen wird, verschweißt ist.

8. Skelettteil, insbesondere Versteifung (1), umfassend eine Vorform (3; 30) nach einem der vorhergehenden Ansprüche sowie ein Verstärkungsmaterial (5) vom Typ Harz, mit dem die Faserstruktur der Vorform imprägniert ist.

9. Verfahren zur Herstellung einer Vorform (3; 30), insbesondere einer Versteifung (1), aus einer dreidimensionalen Faserstruktur, die eine Dicke (Z) aufweist und in einem einzigen Stück gewebt ist, wobei das Herstellungsverfahren einen Schritt des mehrlagigen Webens von Lagen von Kettfäden (17; 170) und von Lagen von Schussfäden (19; 190) umfasst, die gemäß der Dicke verteilt sind, wobei wenigstens ein erster Teil (21; 210) und wenigstens ein zweiter Teil (23; 230) definiert sind, der den ersten Teil in Richtung eines dünnen Rands (7; 70) der Vorform verlängert, sodass die Vorform Folgendes umfasst:
- eine erste Gruppe (C1; C10A, C10B) von aufeinanderfolgenden Lagen von Kettfäden, die wenigstens eine Lage von Kettfäden beinhaltet und die sich im ersten Teil außen befindet,
- eine zweite Gruppe (C2; C20A, C20B) von aufeinanderfolgenden Lagen von Kettfäden, die wenigstens eine Lage von Kettfäden beinhaltet und die sich unmittelbar unter der ersten Gruppe von Lagen von Kettfäden befindet, und
- eine erste Gruppe (T1; T10A, T10B) von aufeinanderfolgenden Lagen von Schussfäden, die wenigstens eine Lage von Schussfäden beinhaltet und die gemäß einer Bindung mit der ersten Gruppe von Lagen von Kettfäden derart verbunden ist, dass sie sich in dem ersten Teil außen befindet, und
- eine zweite Gruppe (T2; T20A, T20B) von aufeinanderfolgenden Lagen von Schussfäden, die wenigstens eine Lage von Schussfäden beinhaltet und die sich unmittelbar unter der ersten Gruppe (T1; T10A, T10B) von Schussfäden in dem ersten Teil (21; 210) befindet,
wobei zur Bildung des zweiten Teils (23; 230):
- die Anzahl an Lagen von Kettfäden (17; 170) im zweiten Teil im Vergleich zur Anzahl an Lagen von Kettfäden, die den ersten Teil (21; 210) bilden, verringert wird, wobei diese Verringerung durch eine Abwesenheit der ersten Gruppe (C1; C10A, C10B) von Lagen von Kettfäden im zweiten Teil erzielt wird, sodass der zweite Teil eine Dicke (Z) aufweist, die im Vergleich zu jener des ersten Teils kleiner ist, und sodass sich die zweite Gruppe (C2; C20A, C20B) von Lagen von Kettfäden im zweiten Teil außen befindet, und
- die erste Gruppe (T1; T10A, T10B) von Lagen von Schussfäden (19; 190) gemäß einer Bindung mit der zweiten Gruppe (C2; C20A, C20B) von Lagen von Kettfäden (17; 170) im zweiten Teil verbunden wird, sodass sich die erste Gruppe von Lagen von Schussfäden im zweiten Teil ebenfalls außen befindet;
wobei das Herstellungsverfahren **dadurch gekennzeichnet ist, dass**:
- die Schussfäden (19; 190) der ersten Gruppe (T1; T10A, T10B) von Lagen von Schussfäden einen Titer aufweisen, der kleiner als der Titer der Schussfäden der zweiten Gruppe (T2; T20A, T20B) von Lagen von Schussfäden ist; und/oder
- die Kettfäden (17; 170) der ersten Gruppe (C1; C10A, C10B) von Lagen von Kettfäden einen Titer aufweisen, der kleiner als der Titer der Kettfäden der zweiten Gruppe (C2; C20A, C20B) von Lagen von Kettfäden ist.

10. Herstellungsverfahren nach Anspruch 9, **dadurch gekennzeichnet, dass**:
- man im Bereich des zweiten Teils (23; 230) einen überschüssigen Teil (20; 200) der Schussfäden der zweiten Gruppe von Lagen von Schussfäden aus der Faserstruktur hervorstehen lässt und
- der überschüssige Teil weggeschnitten wird.

## Claims

1. A preform (3; 30), in particular for a stiffener (1), with a three-dimensional fibrous structure having a thickness (Z) and being woven in a single piece by multilayer weaving of layers of warp yarns (17; 170) and layers of weft yarns (19; 190) distributed along the thickness, the preform defining at least one first portion (21; 210) and at least one second portion (23; 230) extending the first portion toward a thin edge (7; 70) of the preform, the preform comprising:
- a first group (C1; C10A, C10B) of successive layers of warp yarns, which includes at least one layer of warp yarns and which is external in the first portion,
- a second group (C2; C20A, C20B) of successive layers of warp yarns, which includes at least one layer of warp yarns and which is located immediately below the first group of layers of warp yarns,
- a first group (T1; T10A, T10B) of successive layers of weft yarns, which includes at least one layer of weft yarns and which is connected according to a weave with the first group of layers of warp yarns, so as to be external in the first portion, and
- a second group (T2; T20A, T20B) of successive layers of weft yarns, which includes at least one layer of weft yarns and which is located immediately below the first group (T1; T10A, T10B) of layers of weft yarns in the first portion (21; 210), the second group of layers of weft yarns being absent from the second portion (23; 230),
while:
- the number of layers of warp yarns (17; 170) forming the second portion (23; 230) is smaller relative to the number of layers of warp yarns forming the first portion (21; 210), due to the absence of the first group (C1; C10A, C10B) of layers of warp yarns in the second portion, such that the second portion has a smaller thickness (Z) relative to that of the first portion and such that the second group (C2; C20A, C20B) of layers of warp yarns is external in the second portion, and
- the first group (T1; T10A, T10B) of layers of weft yarns (19; 190) extends into the second portion, while being connected according to a weave with the second group of layers of warp yarns in the second portion, such that the first group of layers of weft yarns is also external in the second portion;
**characterized in that**:
- the weft yarns (19; 190) of the first group (T1; T10A, T10B) of layers of weft yarns have a yarn size smaller than the yarn size of the weft yarns of the second group (T2; T20A, T20B) of layers of weft yarns; and/or
- the warp yarns (17; 170) of the first group (C1; C10A, C10B) of layers of warp yarns have a yarn size smaller than the yarn size of the warp yarns of the second group (C2; C20A, C20B) of layers of warp yarns.

2. The preform (3; 30) according to claim 1, **characterized in that** the absence of the second group of layers of weft yarns from the second portion (23; 230), is achieved by interruption of the weft yarns of said second layer of weft yarns, at a junction (25; 250) of the first portion (21; 210) with the second portion (23; 230).

3. The preform (3; 30) according to any one of claims 1 or 2, **characterized in that** the preform contains 6K yarns and 3K yarns.

4. The preform (3; 30) according to any one of the preceding claims, **characterized in that** the second portion (23; 230) comprises at least three layers of warp yarns (17; 170).

5. The preform (3; 30) according to any one of the preceding claims, **characterized in that**:
- the preform comprises a third portion extending the second portion (23; 230) toward the thin edge (7; 70),
- the preform comprises a third group (C3; C30) of successive layers of warp yarns (17; 170), which includes at least one layer of warp yarns and which is located immediately below the first group of layers (C2; C20A, C20B) of warp yarns in the second portion,
- the number of layers of warp yarns forming the third portion is smaller relative to the number of layers of warp yarns forming the second portion (23; 230), due to the absence of the second group of layers of warp yarns in the third portion, such that the third portion has a smaller thickness (Z) relative to that of the second portion and such that the third group of layers of warp yarns is external in the third portion, and
- the first group (T1; T10A, T10B) of layers of weft yarns (19; 190) extends into the third portion, while being connected according to a weave with the third group of layers of warp yarns in the third portion, such that the first group of layers of weft yarns is also external in the third portion.

6. The preform (3; 30) according to any one of the preceding claims, **characterized in that** a plurality of warp yarns (17; 170) and/or weft yarns (19; 190) of the preform bears a hardened polymer contributing a degree of cohesion to the preform at least in the second portion (23; 230).

7. The preform (3; 30) according to claim 6, **characterized in that** the thin edge (7; 70) is welded using said hardened polymer borne by the yarns.

8. A framework part, in particular a stiffener (1), comprising a preform (3; 30) according to any one of the preceding claims, as well as a consolidating material (5), of the resin type, with which the fibrous structure of the preform is impregnated.

9. A method for manufacturing a preform (3; 30), in particular for a stiffener (1), with a three-dimensional fibrous structure having a thickness (Z) and being woven in a single piece, the manufacturing method comprising a step for multilayer weaving of layers of warp yarns (17; 170) and layers of weft yarns (19; 190) distributed along the thickness, wherein one defines at least one first portion (21; 210) and at least one second portion (23; 230) extending the first portion toward a thin edge (7; 70) of the preform, such that the preform comprises:
- a first group (C1; C10A, C10B) of successive layers of warp yarns, which includes at least one layer of warp yarns and which is external in the first portion,
- a second group (C2; C20A, C20B) of successive layers of warp yarns, which includes at least one layer of warp yarns and which is located immediately below the first group of layers of warp yarns,
- a first group (T1; T10A, T10B) of successive layers of weft yarns, which includes at least one layer of weft yarns and which is connected according to a weave with the first group of layers of warp yarns, so as to be external in the first portion, and
- a second group (T2; T20A, T20B) of successive layers of weft yarns, which includes at least one layer of weft yarns and which is located immediately below the first group (T1; T10A, T10B) of layers of weft yarns in the first portion (21; 210),
whereas, to form the second portion (23; 230):
- the number of layers of warp yarns (17; 170) in the second portion is reduced relative to the number of layers of warp yarns forming the first portion (21; 210), this reduction being obtained by the absence of the first group (C1; C10A, C10B) of layers of warp yarns in the second portion, such that the second portion has a smaller thickness relative to that of the first portion and such that the second group (C2; C20A, C20B) of layers of warp yarns is external in the second portion, and
- the first group (T1; T10A, T10B) of layers of weft yarns (19; 190) is bonded according to a weave, with the second group (C2; C20A, C20B) of layers of warp yarns (17; 170) in the second portion, such that the first group of layers of weft yarns is also external in the second portion;
the manufacturing method being **characterized in that**:
- the weft yarns (19; 190) of the first group (T1; T10A, T10B) of layers of weft yarns have a yarn size smaller than the yarn size of the weft yarns of the second group (T2; T20A, T20B) of layers of weft yarns; and/or
- the warp yarns (17; 170) of the first group (C1; C10A, C10B) of layers of warp yarns have a yarn size smaller than the yarn size of the warp yarns of the second group (C2; C20A, C20B) of layers of warp yarns.

10. The manufacturing method according to claim 9, **characterized in that**:
- at the second portion (23; 230), an excess portion (20; 200) of the weft yarns of the second group of layers of weft yarns comes out of the fibrous structure, and
- the excess portion is cut.
